# EUROPÄISCHE PATENTSCHRIFT

(11) **EP 3 973 176 B1**
(45) Veröffentlichungstag und Bekanntmachung des Hinweises auf die Patenterteilung: **26.07.2023**
(21) Anmeldenummer: 20732734.7
(22) Anmeldetag: 19.05.2020
(51) Int. Cl.: E02B 9/06, F03B 3/12

(54) **TURBINENVORRICHTUNG**
TURBINE DEVICE
SYSTÈME DE TURBINE

(30) Priorität: 23.05.2019 DE 102019113848
(43) Veröffentlichungstag der Anmeldung: 30.03.2022
(73) Patentinhaber: Frideco AG, 8213 Neunkirch (CH)
(72) Erfinder: STÄHLE, Carl, 8213 Neunkirch (CH)
(74) Vertreter: Daub, Thomas
(86) Internationale Anmeldenummer: PCT/EP2020/063938
(87) Internationale Veröffentlichungsnummer: WO 2020/234285

(56) Entgegenhaltungen:
- DE-A1-102014 004 506
- DE-T2- 69 733 612
- US-A1- 2016 327 054
- US-A1- 2018 106 234

## Beschreibung

### Stand der Technik

Die Erfindung betrifft eine Turbinenvorrichtung nach dem Oberbegriff des Anspruchs 1, ein Wasserkraftwerk gemäß Anspruch 12 mit einer entsprechenden Turbinenvorrichtung und ein Verfahren zur Auslegung eines Wasserkraftwerks nach Anspruch 13.

Die Druckschrift EP 2 295 808 A2 offenbart eine Turbinenvorrichtung mit Statorblättern, welche in einem flachen Winkel geneigt sind, um eine Verletzung von Fischen zu vermeiden.

Ferner ist aus der Druckschrift US 2018/106234 A1 eine Turbinenvorrichtung gemäß dem Oberbegriff des Anspruchs 1 bekannt.

Die Aufgabe der Erfindung besteht insbesondere darin, eine gattungsgemäße Vorrichtung mit verbesserten Eigenschaften hinsichtlich einer Sicherheit, insbesondere einer Fischfreundlichkeit, insbesondere unter zumindest weitgehender Beibehaltung einer Effizienz bereitzustellen. Die Aufgabe wird erfindungsgemäß durch die Merkmale der Patentansprüche 1 und 13 gelöst, während vorteilhafte Ausgestaltungen und Weiterbildungen der Erfindung den Unteransprüchen entnommen werden können.

### Vorteile der Erfindung

Die Erfindung geht aus von einer Turbinenvorrichtung, insbesondere einer Kaplan-, Rohr- und/oder Strafloturbinenvorrichtung, mit zumindest einer Leitungseinheit zur Leitung zumindest einer Fluidströmung und mit zumindest einer innerhalb der Leitungseinheit angeordneten und um eine Rotationsachse drehbaren Laufradschaufeleinheit, welche zumindest eine Laufradschaufel aufweist, wobei die Turbinenvorrichtung eine Schutzeinheit aufweist, welche dazu vorgesehen ist, in zumindest einem Betriebszustand in der Fluidströmung strömende Objekte, insbesondere Treibgut und bevorzugt Fische, insbesondere Aale, in Richtung zur Rotationsachse zu drängen. Hierdurch kann insbesondere eine Beschädigung der Objekte durch scharfe Außenkanten der Laufradschaufel vermieden werden. Vorteilhaft kann eine sichere und/oder fischfreundliche Ausgestaltung der Laufradschaufel auf einen Teilbereich der Laufradschaufel, welcher der Rotationsachse am Nächsten ist, konzentriert werden.

Unter einer "Turbinenvorrichtung" soll insbesondere eine Vorrichtung verstanden werden, welche dazu vorgesehen ist, eine kinetische Energie eines Fluids, insbesondere Wasser, in Rotationsenergie, insbesondere einer Welle der Turbinenvorrichtung, umzuwandeln. Vorzugsweise entsteht die kinetische Energie durch eine Umwandlung einer potenziellen Energie des Fluids. Vorteilhaft verläuft eine Strömungsrichtung der Fluidströmung zumindest teilweise entlang einer Schwerkraftrichtung. Insbesondere definiert die Leitungseinheit die Strömungsrichtung der Fluidströmung.

Unter einer "Leitungseinheit" soll insbesondere eine Einheit verstanden werden, welche dazu vorgesehen ist, die Fluidströmung zu leiten. Bevorzugt weist die Leitungseinheit zumindest ein insbesondere rohrförmiges Leitungselement auf. Bevorzugt weist die Leitungseinheit zumindest einen Eingang und einen Ausgang auf, zwischen denen die Laufradschaufeleinheit angeordnet ist. Insbesondere kann eine Strömungsrichtung der Fluidströmung zwischen dem Eingang und dem Ausgang kontinuierlich und/oder abrupt variieren.

Unter einer "Laufradschaufeleinheit" soll insbesondere eine Einheit verstanden werden, welche dazu vorgesehen ist, in dem Betriebszustand eine durch vorbeiströmendes Fluid verursachte Rotationsbewegung zu erfahren. Bevorzugt ist die Laufradschaufeleinheit mit zumindest einer Generatoreinheit der Turbinenvorrichtung wirktechnisch verbunden, welche eine Rotationsenergie der Laufradschaufeleinheit in elektrische Energie umwandelt. Insbesondere weist die Turbinenvorrichtung zumindest eine Welle auf, welche die Rotationsachse definiert. Vorteilhaft weist die Laufradschaufeleinheit zumindest eine an der Welle befestigte Laufradschaufelnabe auf. Die Laufradschaufelnabe trägt insbesondere die Laufradschaufel. Insbesondere kann die Laufradschaufel relativ zur Laufradschaufelnabe rotierbar sein. Alternativ könnte die Laufradschaufel aber auch fest mit der Laufradschaufelnabe verbunden sein. Vorzugsweise weist die Laufradschaufel zumindest ein Montageelement auf, welches eine Montage der Laufradschaufel an der Laufradschaufelnabe ermöglicht und/oder eine Justierdrehachse der Laufradschaufel relativ zur Laufradschaufelnabe definiert. Alternativ und/oder zusätzlich kann die Laufradschaufeleinheit zumindest einen Schaufelring aufweisen, welcher insbesondere bei einer Betrachtung entlang der Rotationsachse sämtliche Laufradschaufeln der Laufradschaufeleinheit umgibt. Insbesondere liegt der Schaufelring an Außenkanten sämtlicher Laufradschaufeln an.

Die Laufradschaufel weist insbesondere zumindest ein Schaufelblatt auf, welches vorzugsweise insbesondere bezüglich der Justierdrehachse einander gegenüberliegende Blattbereiche aufweist. Unter einem "Blattbereich" soll insbesondere in diesem Zusammenhang ein von einer reinen Oberfläche verschiedener Teil des Schaufelblatts verstanden werden, welcher zumindest 20 %, vorteilhaft zumindest 30 % und bevorzugt zumindest 40 % eines Volumens des Schaufelblatts aufweist. Insbesondere können beide Blattbereiche das gesamte Schaufelblatt ausbilden. Vorteilhaft bildet der erste Blattbereich eine Vorderseite der Laufradschaufel und der zweite Blattbereich eine Hinterseite der Laufradschaufel. Unter einer "Vorderseite" soll in diesem Zusammenhang insbesondere ein Teil des Schaufelblatts verstanden werden, welcher näher am Eingang der Leitungseinheit angeordnet ist als eine Hinterseite. Vorteilhaft weist das Schaufelblatt zwei einander gegenüberliegende Hauptflächen aus, welche vorzugsweise von beiden Blattbereichen gemeinsam definiert werden. Unter einer "Hauptfläche der Laufradschaufel" soll in diesem Zusammenhang insbesondere eine Fläche verstanden werden, welche eine Seite des Schaufelblatts definiert. Vorzugsweise weist die Laufradschaufel zumindest zwei einander gegenüberliegende Hauptflächen auf. Denkbar wäre, dass beide Blattbereiche zueinander achsensymmetrisch, insbesondere zur Justierdrehachse achsensymmetrisch, ausgebildet sind. Insbesondere weist das Schaufelblatt zumindest eine Außenkante auf, welche bevorzugt einen gemeinsamen äußeren Rand beider Blattbereiche definiert. Insbesondere weist die Vorderseite zumindest eine der Außenkante gegenüberliegende Vorderkante auf. Insbesondere weist die Hinterseite zumindest eine der Außenkante gegenüberliegende Hinterkante auf. Die Außenkante kann insbesondere als eine durchgehende Kante ausgebildet sein. Alternativ könnte die Außenkante durch zumindest ein Stabilisierungselement der Laufradschaufel unterbrochen sein. Unter einem "Stabilisierungselement" soll in diesem Zusammenhang insbesondere ein Teil der Laufradschaufel verstanden werden, welcher dazu vorgesehen ist, in einem Betriebszustand die Laufradschaufel zu stabilisieren, vorzugsweise während einer Drehung der Laufradschaufel. Besonders bevorzugt ist das Stabilisierungselement einstückig mit dem Schaufelblatt ausgebildet. Insbesondere sind die Blattbereiche, das Montagelement und das Stabilisierungselement zueinander einstückig ausgebildet. Unter "einstückig" soll insbesondere zumindest stoff-schlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Vorzugsweise ist die Turbinenvorrichtung als eine Kaplan-Turbinenvorrichtung ausgebildet. Unter einer "Kaplan-Turbinenvorrichtung" soll insbesondere eine Turbinenvorrichtung verstanden werden, bei welcher die Strömungsrichtung von auf die Laufradschaufel treffendem Fluid zumindest annähernd parallel zur Rotationsachse verläuft. Unter "zumindest annähernd" soll hierbei insbesondere verstanden werden, dass die Strömungsrichtung und die Rotationsachse gemeinsam einen Winkel von höchstens 40°, vorteilhaft höchstens 35°, vorteilhaft höchstens 30° und besonders vorteilhaft höchstens 25° aufspannen. Bevorzugt ist die Laufradschaufel der Kaplan-Turbinenvorrichtung verstellbar ausgebildet.

Die Objekte können vorzugsweise natürlich innerhalb von Gewässern auftretende Objekte umfassen, wie beispielsweise Wasserpflanzen und/oder aquatische Lebewesen, insbesondere Fische, insbesondere Aale, und/oder Krabben und/oder Muscheln. Denkbar wäre auch, dass die Objekte Lebensmittel und/oder Landpflanzen und/oder landlebende Lebewesen aufweisen. Darunter, dass ein Objekt in eine Richtung "gedrängt" wird, soll in diesem Zusammenhang insbesondere verstanden werden, das dem Objekt eine Bewegung entgegen der Richtung erschwert wird und/oder eine Bewegung entlang der Richtung begünstigt wird und/oder das Objekt in die Richtung transportiert wird. Bevorzugt ist die Schutzeinheit zumindest in einem für die Objekte erreichbaren Bereich frei von scharfen Kanten. Vorteilhaft ist die Schutzeinheit frei von Anstoßflächen, welche senkrecht zu einer Bewegungsrichtung der Objekte verlaufen. Besonders vorteilhaft bewirkt die Schutzeinheit eine kontinuierliche Bewegung der Objekte in Richtung zur Rotationsachse. Denkbar wäre, dass die Schutzeinheit zumindest teilweise lösbar an einer restlichen Turbinenvorrichtung montiert ist.

Weiterhin wird vorgeschlagen, dass die Schutzeinheit dazu vorgesehen ist, die strömenden Objekte radial zur Rotationsachse hin zu leiten. Bevorzugt leitet die Schutzeinheit die strömenden Objekte mittels einer Formgebung der Schutzeinheit radial zur Rotationsachse hin. Insbesondere weist die Schutzeinheit Teilbereiche auf, welche bei einem Kontakt der strömenden Objekte an den Teilbereichen die Objekte radial zur Rotationsachse hin abgleiten lassen. Vorteilhaft weist die Schutzeinheit zumindest ein Ablenkelement auf, welches dazu vorgesehen ist, eine Bewegungsrichtung der Objekte umzulenken. Insbesondere ist das Ablenkelement als ein mechanisches Element ausgebildet. Denkbar wäre, dass das Ablenkelement als eine Schiene ausgebildet ist, welche insbesondere separat zur Laufradschaufeleinheit ausgebildet ist und die strömenden Objekte vor einem Kontakt mit der Laufradschaufeleinheit radial zur Rotationsachse lenkt. Hierdurch kann insbesondere eine schonende und einfach umzusetzende Bewegung der strömenden Objekte radial zur Rotationsachse hin erreicht werden. Vorteilhaft kann eine Beschädigung der strömenden Objekte durch die Bewegung der strömenden Objekte radial zur Rotationsachse hin vermieden werden. Besonders vorteilhaft kann die Bewegung der strömenden Objekte radial zur Rotationsachse hin ohne einen nennenswerten zusätzlichen Energieverbrauch und/oder eine nennenswerte Verschlechterung eines Wirkungsgrads der Turbinenvorrichtung erreicht werden.

Die Schutzeinheit ist zumindest teilweise einstückig mit der Laufradschaufeleinheit ausgebildet. Darunter, dass zwei Einheiten "zumindest teilweise einstückig" miteinander ausgebildet sind, soll in diesem Zusammenhang insbesondere verstanden werden, dass die beiden Einheiten zumindest ein gemeinsames Element aufweisen. Bevorzugt ist die Schutzeinheit zumindest teilweise einstückig mit der Laufradschaufel ausgebildet. Hierdurch kann insbesondere eine kompakte und robuste Ausgestaltung der Schutzeinheit erreicht werden. Vorteilhaft kann im Vergleich zu einer separat ausgebildeten Schutzeinheit Bauraum eingespart werden. Besonders vorteilhaft kann ein Lösen und/oder Verschieben der Schutzeinheit während eines Betriebs der Turbinenvorrichtung vermieden werden.

Die Schutzeinheit weist zumindest ein Konturelement der Laufradschaufel auf. Unter einem "Konturelement" soll insbesondere ein Element eines Objekts verstanden werden, welches entlang einer vordefinierten Blickrichtung auf das Objekt schauend eine Außenkontur des Objekts zumindest teilweise definiert. Bevorzugt ist die vordefinierte Blickrichtung auf das Konturelement senkrecht zu einer Hauptfläche der Laufradschaufel. Darunter, dass das Konturelement entlang der Blickrichtung schauend die Außenkontur des Objekts "zumindest teilweise definiert" soll in diesem Zusammenhang insbesondere verstanden werden, dass das Konturelement entlang der Blickrichtung schauend die Außenkontur des Objekts zumindest zu 10 %, vorteilhaft zumindest zu 20 % und besonders vorteilhaft zumindest zu 30 % definiert. Insbesondere weist das Konturelement zumindest eine Kante der Laufradschaufel auf. Unter einer "Kante" soll insbesondere ein Oberflächenbereich der Laufradschaufel verstanden werden, welcher die Hauptflächen des Schaufelblatts verbindet. Beispielsweise könnte die Kante glatt oder abgerundet ausgebildet sein. Hierdurch kann insbesondere ein Schutz der strömenden Objekte verbessert werden. Vorteilhaft kann eine Beschädigung der strömenden Objekte durch die Laufradschaufel vermieden werden.

Um den Schutz der strömenden Objekte noch weiter zu steigern, bildet das Konturelement zumindest teilweise, vorteilhaft zu einem Großteil und bevorzugt vollständig eine Vorderkante der Laufradschaufel. Hierdurch kann insbesondere eine schonende Ausgestaltung der Vorderkante, welche im Stand der Technik besonders gefährlich für strömende Objekte ist, erreicht werden. Vorteilhaft kann ein Zerschneiden der Objekte aufgrund einer Rotationsbewegung der Vorderkante vermieden werden.

Ferner wird vorgeschlagen, dass die Vorderkante zumindest im Wesentlichen sichelförmig ausgebildet ist. Unter "zumindest im Wesentlichen" soll insbesondere verstanden werden, dass ein Unterschied sich innerhalb von gängigen Fertigungstoleranzen befindet. Darunter, dass die Vorderkante der Laufradschaufel "sichelförmig" ausgebildet ist, soll in diesem Zusammenhang insbesondere verstanden werden, dass die Vorderkante eine Krümmung aufweist und zumindest ein Ende der Kante auf ein weiteres Ende einer weiteren Kante, insbesondere der Außenkante, der Laufradschaufel mit einer weiteren Krümmung trifft und zur Bildung einer Spitze beiträgt. Unter einer "Krümmung" soll in diesem Zusammenhang insbesondere eine lokale Änderung einer Verlaufsrichtung verstanden werden, insbesondere bei einer Bewegung vom ersten Ende der Vorderkante zum zweiten Ende der Vorderkante. Unter einem "Ende" soll in diesem Zusammenhang insbesondere ein Teilbereich der Vorderkante verstanden werden, welcher die Vorderkante entlang einer Verlaufsrichtung der Vorderkante nach außen abgrenzt und dessen Länge höchstens 20 %, vorteilhaft höchstens 15 %, bevorzugt höchstens 10 % und besonders bevorzugt höchstens 5 % einer Länge der Vorderkante beträgt. Unter einer "Spitze" soll insbesondere ein Teilbereich eines Körpers verstanden werden, welcher den Körper in zumindest eine Richtung nach außen abgrenzt und eine entlang der Richtung verjüngende Form aufweist. Bevorzugt ist die Spitze von der Rotationsachse abgewandt ausgerichtet. Insbesondere ist ein die Vorderkante aufweisender Blattbereich als eine Sichel ausgebildet. Vorteilhaft ist die Vorderkante bei zumindest einer senkrechten Betrachtung auf zumindest eine Hauptfläche der Laufradschaufel bogenförmig ausgebildet. Unter einer "senkrechten Betrachtung auf eine Fläche" soll insbesondere eine Blickrichtung verstanden werden, welche mit einem Punkt der Fläche, den sie schneidet, einen rechten Winkel aufspannt. Insbesondere kann die senkrechte Betrachtung auf die Fläche abhängig von einem betrachteten Punkt der Fläche sein. Unter einer "bogenförmigen Vorderkante" soll in diesem Zusammenhang insbesondere eine Kante verstanden werden, welche eine sich über die gesamte Kante erstreckende und vorzugsweise kontinuierlich veränderliche Krümmung aufweist. Vorzugsweise ist die Vorderkante zur Rotationsachse hin gekrümmt. Hierdurch kann insbesondere ein Leiten der strömenden Objekte zur Rotationsachse verbessert werden. Vorteilhaft können Vorsprünge und/oder hervorstehende Spitzen und/oder Ecken der Vorderkante, welche die strömenden Objekte beschädigen könnten, vermieden werden.

Weiterhin wird vorgeschlagen, dass die Vorderkante in zumindest einer Arbeitsstellung der Laufradschaufeleinheit eine senkrecht zur Rotationsachse verlaufende Ebene in zumindest einem Schnittpunkt durchstößt, welcher sich bei einer gedachten Bewegung der Ebene parallel zur Rotationsachse radial ungleichförmig verschiebt. Insbesondere beschreibt die gedachte Bewegung der Ebene zumindest im Wesentlichen eine Bewegung der strömenden Objekte. Vorteilhaft verschiebt sich der Schnittpunkt in Richtung zur Rotationsachse. Vorzugsweise verschiebt sich der Schnittpunkt bei einer konstanten Bewegungsgeschwindigkeit der Ebene mit einer, insbesondere kontinuierlich, steigenden Bewegungsgeschwindigkeit. Hierdurch kann insbesondere ein sanftes Leiten der strömenden Objekte zur Rotationsachse erreicht werden. Vorteilhaft kann ein Leiten der strömenden Objekte zur Rotationsachse gewährleistet werden, bevor die strömenden Objekte den Vorderteil passieren. Besonders vorteilhaft können Beschädigungen der strömenden Objekte durch ein zu abruptes Leiten der strömenden Objekte vermieden werden.

Um eine Effizienz zu erhöhen, wird vorgeschlagen, dass bei zumindest einer Betrachtung senkrecht auf eine Hauptfläche der Laufradschaufel und einer gedachten Bewegung eines Punkts von einem Ende der Vorderkante zu einem weiteren Ende der Vorderkante sich eine Bewegungsrichtung des Punkts um mindestens 70°, insbesondere mindestens 120°, vorteilhaft mindestens 170°, bevorzugt mindestens 220° und besonders bevorzugt mindestens 270° in eine Richtung dreht. Insbesondere ist ein erstes Ende der Vorderkante im Wesentlichen senkrecht zur Rotationsachse ausgerichtet. Vorzugsweise trägt ein zweites Ende der Vorderkante zur Bildung der Spitze bei. Hierdurch können insbesondere durch eine einzelne Laufradschaufel strömende Objekte über einen großen Bereich abgefangen und in Richtung zur Rotationsachse gedrängt werden.

Insbesondere beträgt bei der senkrechten Betrachtung ein maximaler senkrechter Abstand zwischen einer Verbindungslinie zweier Endpunkte der Vorderkante und beliebigen übrigen Punkten der Vorderkante mindestens 15 %, vorteilhaft mindestens 25 %, bevorzugt mindestens 35 % und besonders bevorzugt mindestens 45 % einer Länge der Verbindungslinie. Vorteilhaft definiert der Abstand eine lokale Bewegungsgeschwindigkeit des Schnittpunkts zur Rotationsachse. Hierdurch kann insbesondere auf effiziente Weise eine Sicherheit erhöht werden. Vorteilhaft kann eine materialsparende und leichte Laufradschaufel mit erhöhter Sicherheit, insbesondere erhöhter Fischfreundlichkeit, bereitgestellt werden.

Vorteilhaft weist die Vorderkante eine Rundung auf, welche zumindest eine erste Hauptfläche der Laufradschaufel mit zumindest einer gegenüberliegenden zweiten Hauptfläche der Laufradschaufel verbindet. Insbesondere bildet die Rundung einen konkaven Teilbereich der Laufradschaufel aus. Vorteilhaft beträgt bei einer Betrachtung einer Querschnittskontur der Rundung senkrecht zu den Hauptflächen ein maximaler senkrechter Abstand zwischen einer Verbindungslinie zweier Endpunkte der Rundung und beliebigen übrigen Punkten der Rundung höchstens 40 %, vorteilhaft höchstens 35 %, bevorzugt höchstens 30 % und besonders bevorzugt höchstens 25 % einer Länge der Verbindungslinie. Vorzugsweise verringert sich der senkrechte Abstand radial in Richtung der Rotationsachse. Hierdurch kann insbesondere eine Beschädigung der strömenden Objekte während des Leitens noch besser vermieden werden. Vorteilhaft kann ein Durchtrennen der strömenden Objekte durch die Vorderkante vermieden werden.

Erfindungsgemäß erhöht sich eine Dicke der Vorderkante radial in Richtung der Rotationsachse, vorzugsweise kontinuierlich. Vorteilhaft flacht die Rundung der Vorderkante proportional zu einer Dicke der Vorderkante ab. Bevorzugt fluchtet die Vorderkante mit dem Montageelement. Hierdurch kann insbesondere eine Beschädigung der strömenden Objekte nahe der Rotationsachse auf einfache Weise vermieden werden. Vorteilhaft können Stoßkräfte bei einem Aufprall der strömenden Objekte auf einem der Rotationsachse zugewandten Endbereich der Vorderkante auf eine höhere Fläche verteilt werden.

Bevorzugt erhöht sich die Dicke radial in Richtung der Rotationsachse um mindestens 200 %, vorteilhaft mindestens 400 %, bevorzugt mindestens 600 % und besonders bevorzugt mindestens 800 %. Hierdurch kann insbesondere eine Beschädigung der strömenden Objekte nahe der Rotationsachse noch besser vermieden werden. Vorteilhaft kann die Rundung der Vorderkante ausreichend flach ausgestaltet werden, um ein Durchtrennen der strömenden Objekte durch die Vorderkante zu verhindern.

Um eine Fischfreundlichkeit effizient zu steigern, wird vorgeschlagen, dass die Laufradschaufel drehunsymmetrisch ausgebildet ist. Darunter, dass ein Körper "drehunsymmetrisch" ist, soll insbesondere verstanden werden, dass der Körper bezüglich beliebiger Rotationsachsen frei von Drehsymmetrien ist. Insbesondere sind beide Blattbereiche frei von Drehsymmetrien zueinander. Vorteilhaft weist der zweite Blattbereich eine bei einer Betrachtung senkrecht zur Hauptfläche der Laufradschaufel zumindest im Wesentlichen geradlinig verlaufende Hinterkante auf. Vorteilhaft kann auf eine Ausgestaltung einer Hinterkante, welche die strömenden Objekte ohnehin nicht berührt, mit erhöhter Sicherheit verzichtet werden. Besonders vorteilhaft kann der weitere, die Hinterkante aufweisende Blattbereich stattdessen zu einer optimalen Energieerzeugung ausgestaltet werden.

Darüber hinaus wird vorgeschlagen, dass die Schutzeinheit zumindest ein Abschirmelement aufweist, welches dazu vorgesehen ist, ein Eindringen von Objekten in einen Bereich zwischen einer radialen Außenseite der Laufradschaufel und zumindest einer Wandung der Leitungseinheit zumindest zu erschweren. Insbesondere kann das Abschirmelement dazu vorgesehen sein, bei einer Betrachtung entlang der Rotationsachse einen Bereich zwischen einer radialen Außenseite der Laufradschaufel und zumindest einer Wandung der Leitungseinheit abzudecken. Darunter, dass das Abschirmelement den Bereich "abdeckt", soll insbesondere verstanden werden, dass das Abschirmelement eine Bewegung der strömenden Objekte in den Bereich erschwert und vorzugsweise verhindert. Unter einer "radialen Außenseite" soll insbesondere eine Seite der Laufradschaufel verstanden werden, welche von der Rotationsachse abgewandt ist. Insbesondere definiert die Außenkante der Laufradschaufel die radiale Außenseite der Laufradschaufel. Insbesondere könnte der Schaufelring zu einer Erschwerung des Eindringens der Objekte in den Bereich zwischen der radialen Außenseite und der Wandung beitragen. Hierdurch kann insbesondere eine Sicherheit der Außenkante erhöht werden. Vorteilhaft können Beschädigungen der strömenden Objekte durch die Außenkante vermieden werden.

In einer alternativen Ausgestaltung könnte das Abschirmelement als ein separates, an der Leitungseinheit befestigtes Zusatzelement ausgebildet sein. Bevorzugt ist das Abschirmelement zumindest teilweise einstückig mit der Leitungseinheit ausgebildet und vorzugsweise als ein Rücksprung der Leitungseinheit ausgebildet. Insbesondere verbindet das Abschirmelement einen dem Eingang zugewandten ersten Teilbereich der Leitungseinheit mit der Wandung, welche insbesondere ein Teil eines dem Ausgang zugewandten zweiten Teilbereichs der Leitungseinheit ist. Insbesondere können die Wandung und/oder der zweite Teilbereich einen zu einem ersten Durchmesser des ersten Teilbereichs höheren und/oder im Wesentlichen identischen Durchmesser aufweisen. Darunter, dass ein Wert und/oder ein Element zu einem weiteren Wert und/oder Element "zumindest im Wesentlichen identisch" ist, soll insbesondere verstanden werden, dass der Wert und/oder das Element eine Abweichung von höchstens 20 %, vorteilhaft höchstens 15 %, bevorzugt höchstens 10 % und besonders bevorzugt höchstens 5 % bezüglich des Werts und/oder einer Formgebung des weiteren Elements aufweist. Insbesondere kann die Wandung einen geradlinigen und/oder gebogenen Verlauf aufweisen. Hierdurch kann insbesondere auf einfache Weise eine Sicherheit der Außenkante erhöht werden. Vorteilhaft kann auf zusätzliche Montageschritte zu einer Befestigung des Abschirmelements verzichtet werden.

Ferner wird ein Wasserkraftwerk, insbesondere mit erhöhtem Schutz von in einer Fluidströmung strömenden Objekten, mit einer erfindungsgemäßen Turbinenvorrichtung vorgeschlagen. Hierdurch kann insbesondere eine Sicherheit von durch das Wasserkraftwerk strömenden Objekten, insbesondere Treibgut und bevorzugt Fischen, insbesondere Aalen, erhöht werden.

Die Erfindung geht in einem weiteren Aspekt aus von einem Verfahren zur Auslegung eines Wasserkraftwerks, insbesondere mit erhöhtem Schutz von in einer Fluidströmung strömenden Objekten.

Es wird vorgeschlagen, dass eine Reduktion eines Wirkungsgrads aufgrund einer Verwendung einer erfindungsgemäßen Turbinenvorrichtung durch einen Verzicht auf zumindest eine weitere Schutzmaßnahme für in der Fluidströmung strömende Objekte wenigstens kompensiert wird. Die Schutzmaßnahmen umfassen beispielsweise eine Verwendung von Treibgutrechen und/oder eine Verringerung eines Stababstands von Treibgutrechen. Hierdurch kann insbesondere ein Wirkungsgrad des Wasserkraftwerks bei einer hohen Sicherheit des Wasserkraftwerks gesteigert werden.

Die erfindungsgemäße Turbinenvorrichtung soll hierbei nicht auf die oben beschriebene Anwendung und Ausführungsform beschränkt sein. Insbesondere kann die erfindungsgemäße Turbinenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Wasserkraftwerks mit einer Turbinenvorrichtung,
- Fig. 2: eine nähere schematische Darstellung eines Teils der Turbinenvorrichtung,
- Fig. 3: verschiedene schematische Ansichten einer Laufradschaufel der Turbinenvorrichtung,
- Fig. 4: ein schematisches Verlaufsdiagramm eines Verfahrens zur Auslegung des Wasserkraftwerks,
- Fig. 5: eine nähere schematische Darstellung eines Teils einer weiteren Turbinenvorrichtung und
- Fig. 6: verschiedene schematische Ansichten einer weiteren Laufradschaufel der weiteren Turbinenvorrichtung.

### Beschreibung der Ausführungsbeispiele

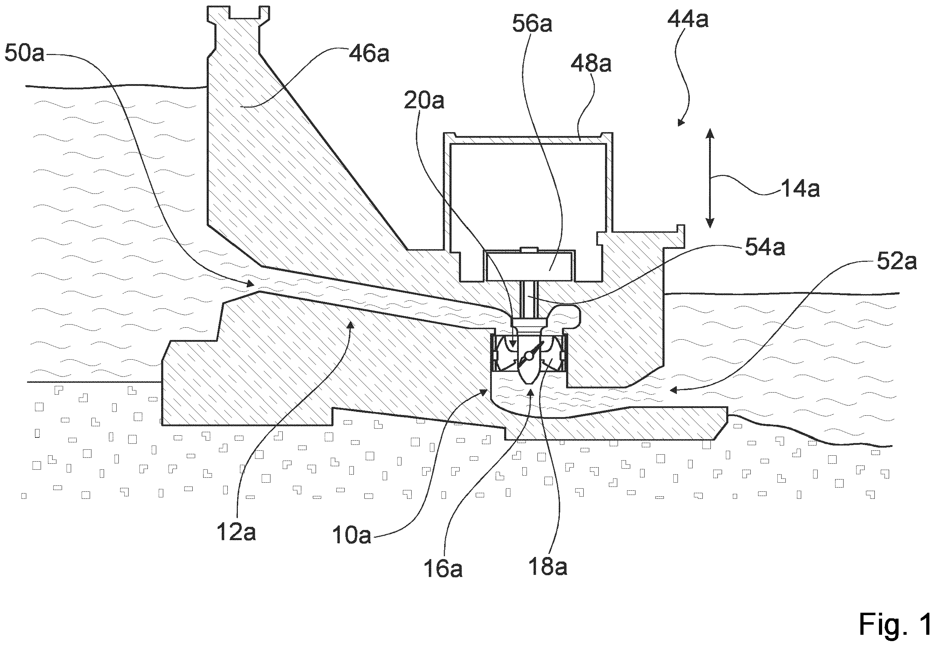

Fig. 1 zeigt ein Wasserkraftwerk 44a. Das Wasserkraftwerk 44a weist einen erhöhten Schutz von in einer Fluidströmung (nicht dargestellt) strömenden Objekten (nicht dargestellt) auf. Das Wasserkraftwerk 44a weist einen Staudamm 46a auf. Das Wasserkraftwerk 44a weist ein Maschinenhaus 48a auf.

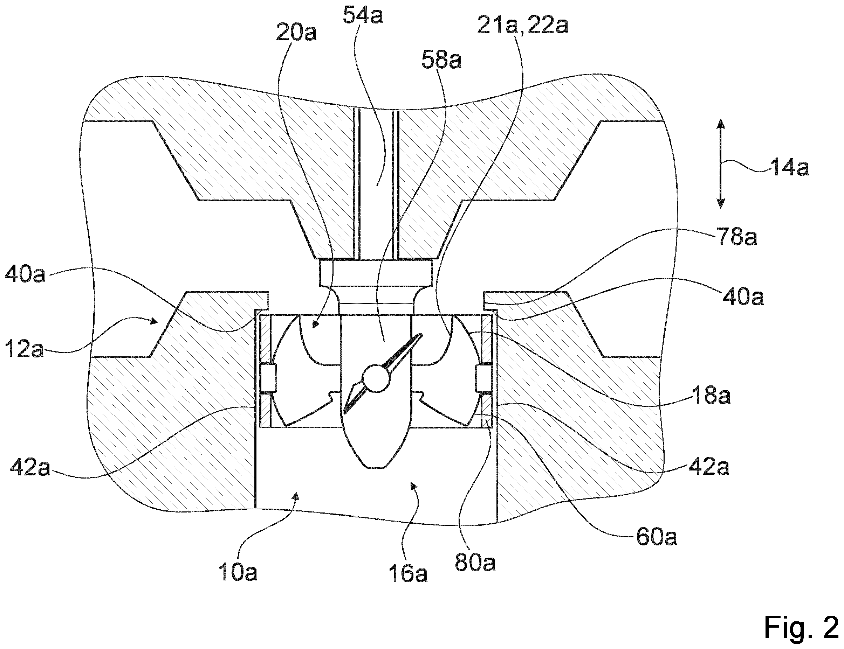

Das Wasserkraftwerk 44a weist eine Turbinenvorrichtung 10a auf. Ein Teil der Turbinenvorrichtung 10a ist in Figur 2 näher dargestellt. Die Turbinenvorrichtung 10a ist als eine Kaplanturbinenvorrichtung ausgebildet. Alternativ könnte die Turbinenvorrichtung 10a auch als eine Rohrturbinenvorrichtung und/oder eine Strafloturbinenvorrichtung ausgebildet sein.

Die Turbinenvorrichtung 10a weist eine Leitungseinheit 12a auf. Die Leitungseinheit 12a ist zu einer Leitung der Fluidströmung vorgesehen. Die Leitungseinheit 12a ist als ein Rohrsystem ausgebildet. Die Leitungseinheit 12a weist eine Eingangsöffnung 50a auf. Die Leitungseinheit 12a weist eine Ausgangsöffnung 52a auf. Die Eingangsöffnung 50a und die Ausgangsöffnung 52a definieren gemeinsam eine Richtung der Fluidströmung. Die Fluidströmung verläuft von der Eingangsöffnung 50a zur Ausgangsöffnung 52a. Die Turbinenvorrichtung 10a weist eine Laufradschaufeleinheit 16a auf. Die Laufradschaufeleinheit 16a ist innerhalb der Leitungseinheit 12a angeordnet. Die Laufradschaufeleinheit 16a ist um eine Rotationsachse 14a drehbar. Die Rotationsachse 14a ist parallel zu einer Schwerkraftrichtung ausgerichtet. Alternativ könnte die Rotationsachse 14a auch senkrecht zu einer Schwerkraftrichtung ausgerichtet sein. Die Laufradschaufeleinheit 16a weist eine Laufradschaufelnabe 58a auf. Die Laufradschaufeleinheit 16a weist vier Laufradschaufeln auf, welche identisch zueinander ausgebildet sind, weshalb lediglich eine Laufradschaufel 18a ein Bezugszeichen erhält und im Folgenden beschrieben wird. Alternativ könnte die Laufradschaufeleinheit 16a auch beliebige andere Anzahlen an Laufradschaufeln aufweisen. Die Laufradschaufel 18a ist drehbar mit der Laufradschaufelnabe 58a verbunden. Die Laufradschaufel 18a befindet sich in einer Arbeitsstellung.

Die Laufradschaufeleinheit 16a weist einen Schaufelring 80a auf. Der Schaufelring 80a umgibt bei einer Betrachtung entlang der Rotationsachse 14a die Laufradschaufel 18a. Der Schaufelring 80a weist Ausnehmungen auf. Die Laufradschaufel 18a weist ein Stabilisierungselement 72a auf. Das Stabilisierungselement 72a ist dazu vorgesehen, die Laufradschaufel 18a während einer Drehung der Laufradschaufel 18a zu stabilisieren. Das Stabilisierungselement 72a greift in eine der Ausnehmungen des Schaufelrings 80a ein.

Die Laufradschaufeleinheit 16a ist fest an einer Welle 54a befestigt. Die Welle 54a ist mit einem Generator 56a wirkverbunden. Der Generator 56a ist im Maschinenhaus 48a angeordnet. In einem Betriebszustand versetzt die Fluidströmung die Laufradschaufeleinheit 16a in Drehung. Die Laufradschaufeleinheit 16a gibt die Drehung an die Welle 54a weiter. Der Generator 56a erzeugt unter Verwendung der Drehung der Welle 54a Strom.

Die Turbinenvorrichtung 10a weist eine Schutzeinheit 20a auf. Die Schutzeinheit 20a ist dazu vorgesehen, in dem Betriebszustand in der Fluidströmung strömende Objekte in Richtung in Richtung zur Rotationsachse 14a zu drängen. Die Schutzeinheit 20a ist dazu vorgesehen, die strömenden Objekte radial zur Rotationsachse 14a hin zu leiten. Alternativ könnte die Schutzeinheit 20a auch lediglich eine Bewegung von in der Nähe der Rotationsachse 14a strömenden Objekten entgegen der Rotationsachse 14a verhindern.

Die Schutzeinheit 20a ist zumindest teilweise einstückig mit der Laufradschaufeleinheit 16a ausgebildet. Die Schutzeinheit 20a weist ein Konturelement 21a der Laufradschaufel 18a auf. Das Konturelement 21a bildet eine Vorderkante 22a der Laufradschaufel 18a vollständig aus. Alternativ könnte das Konturelement 21a lediglich einen Teil der Vorderkante 22a ausbilden. Die Schutzeinheit 20a weist zwei Abschirmelemente 40a auf, welche identisch zueinander sind, weshalb im Folgenden lediglich eines der Abschirmelemente 40a beschrieben wird. Das Abschirmelement 40a ist dazu vorgesehen, ein Eindringen von Objekten in einen Bereich zwischen einer radialen Außenseite der Laufradschaufel 18a und zumindest einer Wandung 42a der Leitungseinheit 12a zumindest zu erschweren. Das Abschirmelement 40a ist einstückig mit der Leitungseinheit 12a ausgebildet. Alternativ könnte das Abschirmelement 40a als ein separates Element ausgebildet und an der Leitungseinheit 12a befestigt sein. Das Abschirmelement 40a verbindet einen äußeren Teilbereich 78a mit der Wandung 42a. Die Wandung 42a weist einen höheren Durchmesser als der äußere Teilbereich 78a auf. Die Wandung 42a ist geradlinig ausgebildet. Alternativ könnte die Wandung 42a gebogen ausgebildet sein.

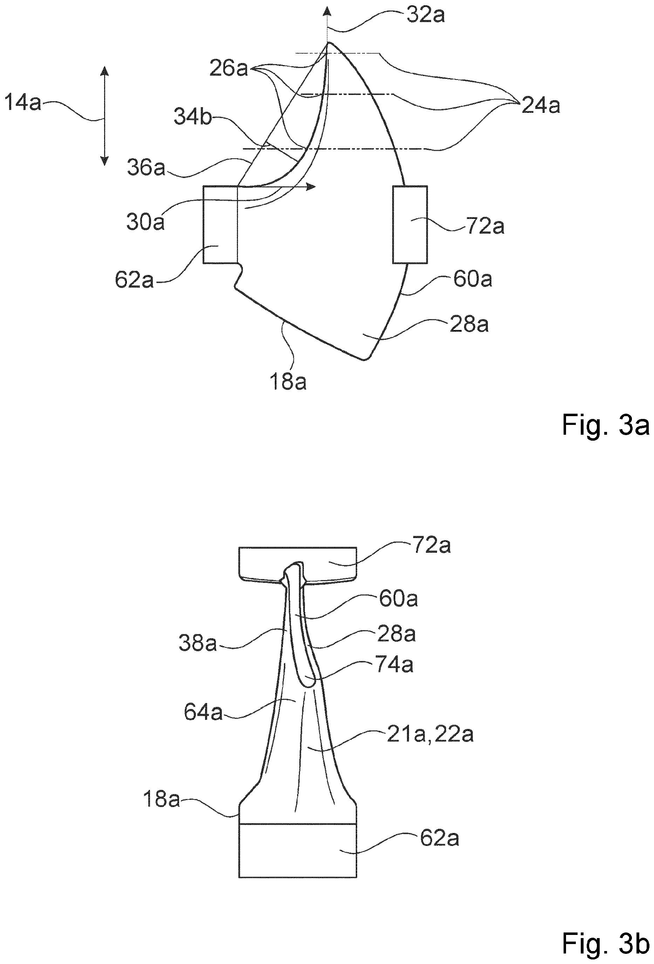

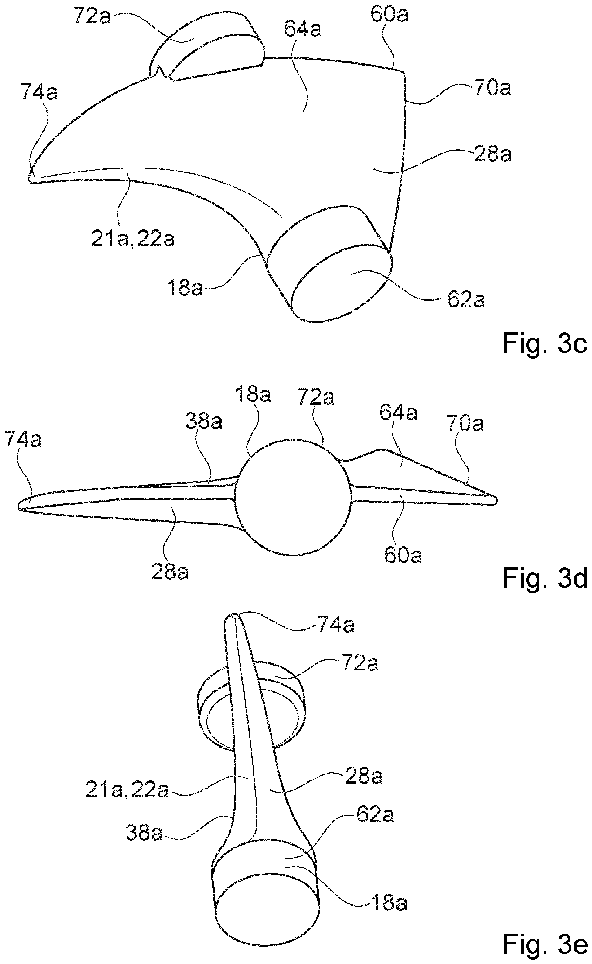

Die Figuren 3a bis 3e zeigen unterschiedliche schematische Darstellungen der Laufradschaufel 18a. Die Laufradschaufel 18a weist ein Montageelement 62a auf. Das Montageelement 62a trägt zu einer Befestigung der Laufradschaufel 18a an der Laufradschaufelnabe 58a bei. Das Montageelement 62a befindet sich in einem montierten Zustand vollständig innerhalb der Laufradschaufelnabe 58a. Die Laufradschaufel 18a weist ein Schaufelblatt 64a auf. Das Schaufelblatt 64a weist eine erste Hauptfläche 28a und eine zweite Hauptfläche 38a auf. Die Hauptflächen 28a, 38a sind einander gegenüberliegend angeordnet. Die Laufradschaufel 18a weist eine Außenkante 60a auf. Die Außenkante 60a verbindet beide Hauptflächen 28a, 38a miteinander. Die Außenkante 60a definiert die radiale Außenseite der Laufradschaufel 18a.

Das Schaufelblatt 64a weist einen ersten Blattbereich 66a und einem zweiten Blattbereich 68a auf. Die Außenkante 60 definiert einen gemeinsamen Rand beider Blattbereiche 66a, 68a. Die Laufradschaufel 18a ist drehunsymmetrisch. Der erste Blattbereich 66a und der zweite Blattbereich 68a sind zueinander verschieden ausgebildet. Alternativ könnten beide Blattbereichs 66a, 68a auch identisch zueinander ausgestaltet sein. Der erste Blattbereich 66a weist eine bei einer Betrachtung senkrecht auf die Hauptflächen 28a, 38a im Wesentlichen geradlinige Hinterkante 70a auf. Der zweite Blattbereich 68a weist eine Vorderkante 22a auf.

Die Vorderkante 22a ist bogenförmig ausgebildet. Alternativ könnte die Vorderkante 22a auch Ecken und/oder mehrere unterschiedliche Krümmungsrichtungen aufweisen. Die Vorderkante 22a ist sichelförmig ausgebildet. Die Vorderkante 22a trifft in einer Spitze 74a auf die Außenkante 60a. Der zweite Blattbereich 68a ist als eine Sichel ausgebildet. Die Vorderkante 22a durchstößt in der Arbeitsstellung eine senkrecht zur Rotationsachse 14a verlaufende Ebene 24a in einem Schnittpunkt 26a. Der Schnittpunkt 26a verschiebt sich bei einer gedachten Bewegung der Ebene 24a parallel zur Rotationsachse 14a radial ungleichförmig in Richtung zur Rotationsachse 14a. Alternativ könnte der Schnittpunkt 26a sich gleichförmig verschieben.

Bei der Betrachtung senkrecht auf die Hauptflächen 28a, 38a der Laufradschaufel 18a und einer gedachten Bewegung eines Punkts (nicht dargestellt) von einem Ende der Vorderkante 22a zu einem weiteren Ende der Vorderkante 22a dreht sich eine Bewegungsrichtung des Punkts um etwa 80°. Alternativ könnte sich die Bewegungsrichtung des Punkts um 100° oder 200° drehen. Eine erste Bewegungsrichtung 30a des Punkts am Ende der Vorderkante 22a und eine zweite Bewegungsrichtung 32a des Punkts am weiteren Ende der Vorderkante 22a spannen gemeinsam einen Winkel von etwa 80° auf.

Bei der Betrachtung senkrecht auf die Hauptflächen 28a, 38a der Laufradschaufel 18a beträgt ein maximaler senkrechter Abstand 34a zwischen einer Verbindungslinie 36a zweier Endpunkte der Vorderkante 22a und beliebigen übrigen Punkten der Vorderkante 22a etwa 40 % einer Länge der Verbindungslinie 36a. Alternativ könnte der senkrechte Abstand 34a 60 % oder 80 % einer Länge der Verbindungslinie 36a betragen.

Die Vorderkante 22a weist eine Rundung auf. Die Rundung verbindet die erste Hauptfläche 28a der Laufradschaufel 18a mit der zweiten Hauptfläche 38a der Laufradschaufel 18a. Eine Dicke der Vorderkante 22a erhöht sich radial in Richtung der Rotationsachse 14a. Die Rundung flacht proportional zur Erhöhung der Dicke der Vorderkante 22a ab. Die Dicke der Vorderkante 22a erhöht sich radial in Richtung der Rotationsachse 14a um etwa 1000 %. Alternativ könnte sich die Dicke der Vorderkante 22a radial in Richtung der Rotationsachse 14a um etwa 200 % oder 1200 % erhöhen.

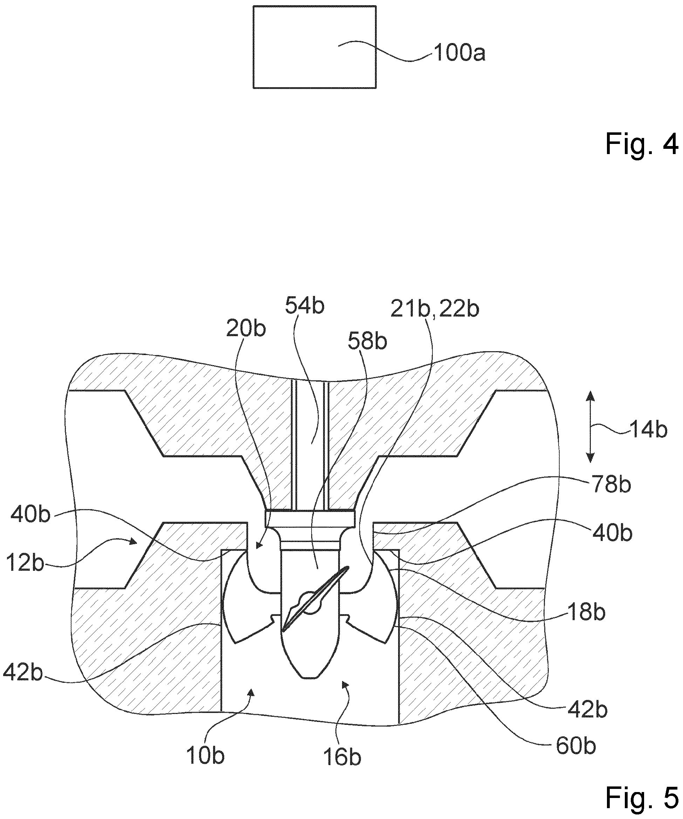

In Figur 4 ist ein schematisches Verlaufsdiagramm eines Verfahrens zur Auslegung des Wasserkraftwerks 44a dargestellt. In einem Auslegungsschritt 100a wird das Wasserkraftwerk 44a mit der Turbinenvorrichtung 10a ausgestattet. Eine Reduktion eines Wirkungsgrads aufgrund der Verwendung der Turbinenvorrichtung 10a wird durch einen Verzicht auf eine weitere Schutzmaßnahme kompensiert. In diesem Fall ist die weitere Schutzmaßnahme das Ausstatten des Wasserkraftwerks 44a mit Treibgutrechen.

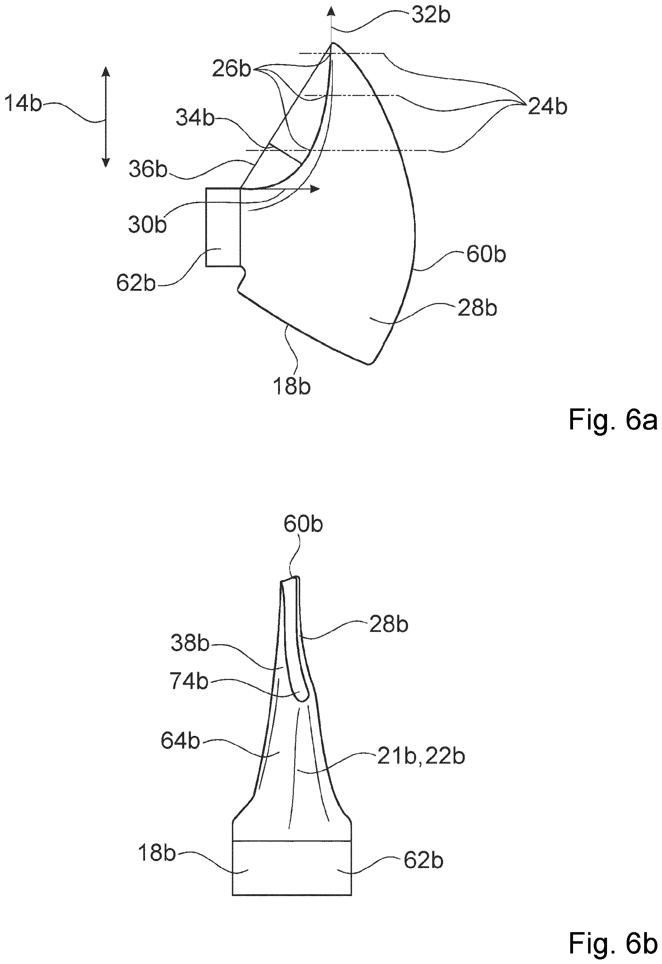

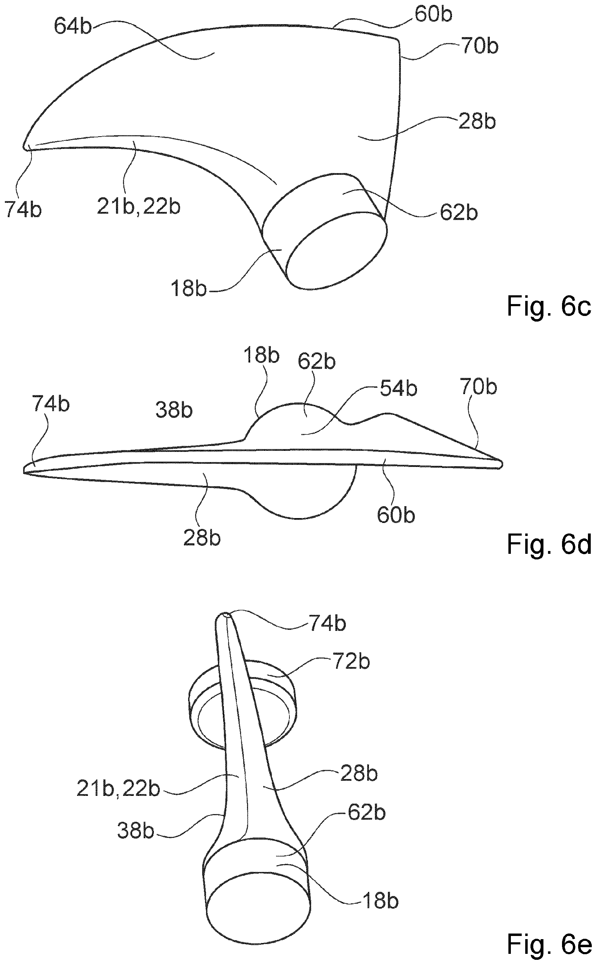

In den Figuren 5 und 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 6 ist der Buchstabe a durch den Buchstaben b ersetzt.

Figuren 5 und 6a bis 6e zeigen eine schematische Darstellung eines Teils einer weiteren Turbinenvorrichtung 10b. Die weitere Turbinenvorrichtung 10b weist eine weitere Laufradschaufeleinheit 16b mit weiteren Laufradschaufeln auf, von denen im Folgenden lediglich eine weitere Laufradschaufel 18b beschrieben wird. Die weitere Laufradschaufeleinheit 16b ist frei von Schaufelringen. Die weitere Laufradschaufel 18b ist frei von Führungselementen. Die weitere Laufradschaufel 18b ist unbeweglich mit einer weiteren Laufradschaufelnabe 58b verbunden.

### Bezugszeichen

- 10: Turbinenvorrichtung
- 12: Leitungseinheit
- 14: Rotationsachse
- 16: Laufradschaufeleinheit
- 18: Laufradschaufel
- 20: Schutzeinheit
- 21: Konturelement
- 22: Vorderkante
- 24: Ebene
- 26: Schnittpunkt
- 28: Hauptfläche
- 30: Bewegungsrichtung
- 32: Bewegungsrichtung
- 34: Abstand
- 36: Verbindungslinie
- 38: Hauptfläche
- 40: Abschirmelement
- 42: Wandung
- 44: Wasserkraftwerk
- 46: Staudamm
- 48: Maschinenhaus
- 50: Eingangsöffnung
- 52: Ausgangsöffnung
- 54: Welle
- 56: Generator
- 58: Laufradschaufelnabe
- 60: Außenkante
- 62: Montageelement
- 64: Schaufelblatt
- 66: Blattbereich
- 68: Blattbereich
- 70: Hinterkante
- 72: Stabilisierungselement
- 74: Spitze
- 78: Teilbereich
- 80: Schaufelring
- 100: Auslegungsschritt

## Patentansprüche

1. Turbinenvorrichtung (10a-b), insbesondere Kaplan-, Rohr- und/oder Strafloturbinenvorrichtung, mit zumindest einer Leitungseinheit (12a-b) zur Leitung zumindest einer Fluidströmung und mit zumindest einer innerhalb der Leitungseinheit (12a-b) angeordneten und um eine Rotationsachse (14ab) drehbaren Laufradschaufeleinheit (16a-b), welche zumindest eine Laufradschaufel (18a-b) aufweist, und mit einer Schutzeinheit (20a-b), welche dazu vorgesehen ist, in zumindest einem Betriebszustand in der Fluidströmung strömende Objekte, in Richtung zur Rotationsachse (14a-b) zu drängen, wobei die Schutzeinheit (20a-b) zumindest teilweise einstückig mit der Laufradschaufeleinheit (16a-b) ausgebildet ist und zumindest ein Konturelement (21a-b) der Laufradschaufel (18a-b) aufweist, welches zumindest teilweise eine Vorderkante (22a-b) der Laufradschaufel (18a-b) bildet, **dadurch gekennzeichnet, dass** eine Dicke der Vorderkante (22ab) sich radial in Richtung der Rotationsachse (14a-b) erhöht.

2. Turbinenvorrichtung (10a-b) nach Anspruch 1, **dadurch gekennzeichnet, dass** die Schutzeinheit (20a-b) dazu vorgesehen ist, die strömenden Objekte radial zur Rotationsachse (14a-b) hin zu leiten.

3. Turbinenvorrichtung (10a-b) nach Anspruch 1 oder 2, **dadurch gekennzeichnet, dass** die Vorderkante (22a-b) zumindest im Wesentlichen sichelförmig ausgebildet ist.

4. Turbinenvorrichtung (10a-b) nach einem der vorhergehenden Ansprüche, **dadurch gekennzeichnet, dass** die Vorderkante (22a-b) in zumindest einer Arbeitsstellung der Laufradschaufeleinheit (16a-b) eine senkrecht zur Rotationsachse (14a-b) verlaufende Ebene (24a-b) in zumindest einem Schnittpunkt (26a-b) durchstößt, welcher sich bei einer gedachten Bewegung der Ebene (24a-b) parallel zur Rotationsachse (14a-b) radial ungleichförmig verschiebt.

5. Turbinenvorrichtung (10a-b) nach einem der vorhergehenden Ansprüche, **dadurch gekennzeichnet, dass** bei zumindest einer Betrachtung senkrecht auf eine Hauptfläche (28a-b, 38a-b) der Laufradschaufel (18a-b) und einer gedachten Bewegung eines Punkts von einem Ende der Vorderkante (22a-b) zu einem weiteren Ende der Vorderkante (22a-b) sich eine Bewegungsrichtung (30a-b, 32a-b) des Punkts um mindestens 70° in eine Richtung dreht.

6. Turbinenvorrichtung (10a-b) nach einem der vorhergehenden Ansprüche, **dadurch gekennzeichnet, dass** bei zumindest einer Betrachtung senkrecht auf eine Hauptfläche (28a-b, 38a-b) der Laufradschaufel (18a-b) ein maximaler senkrechter Abstand (34a-b) zwischen einer Verbindungslinie (36a-b) zweier Endpunkte der Vorderkante (22a-b) und beliebigen übrigen Punkten der Vorderkante (22a-b) mindestens 15 % einer Länge der Verbindungslinie (36a-b) beträgt.

7. Turbinenvorrichtung (10a-b) nach einem der vorhergehenden Ansprüche, **dadurch gekennzeichnet, dass** die Vorderkante (22a-b) eine Rundung aufweist, welche zumindest eine erste Hauptfläche (28a-b) der Laufradschaufel (18a-b) mit zumindest einer gegenüberliegenden zweiten Hauptfläche (38a-b) der Laufradschaufel (18a-b) verbindet.

8. Turbinenvorrichtung (10a-b) nach einem der vorhergehenden Ansprüche, **dadurch gekennzeichnet, dass** sich die Dicke radial in Richtung der Rotationsachse (14a-b) um mindestens 200 % erhöht.

9. Turbinenvorrichtung (10a-b) nach einem der vorhergehenden Ansprüche, **dadurch gekennzeichnet, dass** die Laufradschaufel (18a-b) drehunsymmetrisch ausgebildet ist.

10. Turbinenvorrichtung (10a-b) nach einem der vorhergehenden Ansprüche, **dadurch gekennzeichnet, dass** die Schutzeinheit (20a-b) zumindest ein Abschirmelement (40a-b) aufweist, welches dazu vorgesehen ist, ein Eindringen von Objekten in einen Bereich zwischen einer radialen Außenseite der Laufradschaufel (18a-b) und zumindest einer Wandung (42a-b) der Leitungseinheit (12a-b) zumindest zu erschweren.

11. Turbinenvorrichtung (10a-b) nach Anspruch 10, **dadurch gekennzeichnet, dass** das Abschirmelement (40a-b) zumindest teilweise einstückig mit der Leitungseinheit (12a-b) ausgebildet ist.

12. Wasserkraftwerk (44a), insbesondere mit erhöhtem Schutz von in einer Fluidströmung strömenden Objekten, mit einer Turbinenvorrichtung (10a) nach einem der vorhergehenden Ansprüche.

13. Verfahren zur Auslegung eines Wasserkraftwerks (44a), insbesondere mit erhöhtem Schutz von in einer Fluidströmung strömenden Objekten, insbesondere nach Anspruch 12, **dadurch gekennzeichnet, dass** eine Reduktion eines Wirkungsgrads aufgrund einer Verwendung einer Turbinenvorrichtung (10a) nach einem der Ansprüche 1 bis 11 durch einen Verzicht auf zumindest eine weitere Schutzmaßnahme für in der Fluidströmung strömende Objekte wenigstens kompensiert wird.

## Claims

1. Turbine device (10a-b), in particular Kaplan turbine device, tubular turbine device and/or Straflo turbine device,
with at least one conduction unit (12a-b) for conveying at least one fluid flow, and with at least one impeller vane unit (16a-b), which is arranged within the conduction unit (12a-b), which is rotatable around a rotation axis (14a-b) and which comprises at least one impeller vane (18a-b),
and with a protective unit (20a-b) which is configured, in at least one operating state, to urge objects flowing in the fluid flow in a direction toward the rotation axis (14a-b), the protection unit (20a-b) being realized at least partially integrally with the impeller vane unit (16a-b) and comprising at least one contour element (21a-b) of the impeller vane (18a-b), which at least partially forms a front edge (22a-b) of the impeller vane (18a-b),
**characterised in that** a thickness of the front edge (22a-b) increases radially towards the rotation axis (14a-b).

2. Turbine device (10a-b) according to claim 1, **characterized in that** the protective unit (20a-b) is configured to conduct the flowing objects radially towards the rotation axis (14a-b).

3. Turbine device (10a-b) according to claim 1 or 2,
**characterised in that** the front edge (22a-b) is realized at least substantially in a sickle shape.

4. Turbine device (10a-b) according to one of the preceding claims,
**characterised in that** in at least one operative position of the impeller vane unit (16a-b), the front edge (22a-b) penetrates a plane (24a-b) extending perpendicularly to the rotation axis (14a-b) in at least one intersection point (26a-b) which, in an imaginary movement of the plane (24a-b) parallel to the rotation axis (14a-b), is displaced in a radially non-uniform manner.

5. Turbine e device (10a-b) according to one of the preceding claims,
**characterised in that** in at least one view perpendicularly onto a main surface (28a-b, 38a-b) of the impeller vane (18a-b) and in an imaginary movement of a point from one end of the front edge (22a-b) to a further end of the front edge (22a-b), a movement direction (30a-b, 32a-b) of the point rotates by at least 70°in one direction.

6. Turbine device (10a-b) according to one of the preceding claims,
**characterised in that** in at least one view perpendicularly onto a main surface (28a-b, 38a-b) of the impeller vane (18a-b), a maximum perpendicular distance (34a-b) between a connecting line (36a-b) of two end points of the front edge (22a-b) and any remaining points of the front edge (22a-b) is in particular at least 15 % of a length of the connecting line (36a-b).

7. Turbine device (10a-b) according to one of the preceding claims,
**characterised in that** the front edge (22a-b) has a rounding, which connects at least one first main surface (28a-b) of the impeller vane (18a-b) to at least one opposite-situated second main surface (38a-b) of the impeller vane (18a-b).

8. Turbine device (10a-b) according to one of the preceding claims,
**characterised in that** the thickness increases by at least 200 % radially in a direction toward the rotation axis (14a-b).

9. Turbine device (10a-b) according to one of the preceding claims,
**characterised in that** the impeller vane (18a-b) is realized in a rotationally non-symmetrical manner.

10. Turbine device (10a-b) according to one of the preceding claims,
**characterised in that** the protective unit (20a-b) comprises at least one shielding element (40a-b), which is configured to at least encumber an entry of objects into a region between a radially outer side of the impeller vane (18a-b) and at least one wall (42a-b) of the conduction unit (12a-b).

11. Turbine device (10a-b) according to claim 10,
**characterised in that** the shielding element (40a-b) is realized at least partially integrally with the conduction unit (12a-b).

12. Hydropower plant (44a), in particular with augmented protection of objects flowing in a fluid flow, with a turbine device (10a) according to one of the preceding claims.

13. Method for designing a hydropower plant (44a), in particular with augmented protection of objects flowing in a fluid flow, in particular according to claim 12,
**characterised in that** a reduction of an efficiency rate due to a utilization of a turbine device (10a) according to one of claims 1 to 11 is at least compensated by dispensing with at least one further protection measure for objects flowing in the fluid flow.

## Revendications

1. Dispositif de turbine (10a-b), en particulier dispositif de turbine Kaplan, de turbine tubulaire et/ou de turbine Straflo,
avec au moins une unité de conduit (12a-b) pour conduire au moins un écoulement de fluide
et avec au moins une unité de pale de rotor (16a-b) agencé dans l'unité de conduit (12a-b) et tournable autour d'un axe rotatif (14a-b), qui comprend au moins une pale de rotor (18a-b), et
avec une unité protective (20a-b) prévue, en au moins un état de fonctionnement, pour pousser des objets flottant dans l'écoulement de fluide dans une direction vers l'axe rotatif (14a-b), l'unité protective (20a-b) étant formée au moins partiellement intégralement avec l'unité de pale de rotor (16a-b) et comprenant au moins un élément-contour (21a-b) de la pale de rotor (18a-b) qui forme au moins partiellement une arête avant (22a-b) de la pale de rotor (18a-b),
**caractérisé en ce qu'**une épaisseur de l'arête avant (22a-b) s'augmente radialement dans une direction vers l'axe rotatif (14a-b).

2. Dispositif de turbine (10a-b) selon la revendication 1,
**caractérisé en ce que** l'unité protective (20a-b) est prévue pour conduire les objets flottant radialement vers l'axe rotatif (14a-b).

3. Dispositif de turbine (10a-b) selon la revendication 1 ou 2,
**caractérisé en ce que** l'arête avant (22a-b) est réalisée au moins sensiblement en forme de faucille.

4. Dispositif de turbine (10a-b) selon l'une des revendications précédentes,
**caractérisé en ce que** dans au moins une position de fonctionnement de l'unité de pale de rotor (16a-b), l'arête avant (22a-b) perce un plan (24a-b) s'étendant perpendiculairement à l'axe rotatif (14a-b) dans au moins un point d'intersection (26a-b), ledit point d'intersection (26a-b)i se déplaçant dans un mouvement imaginaire du plan (24a-b) en parallèle à l'axe rotatif (14a-b) de façon radialement non uniforme.

5. Dispositif de turbine (10a-b) selon l'une des revendications précédentes,
**caractérisé en ce que** dans au moins une vue perpendiculairement sur une surface principale (28a-b, 38a-b) de la pale de rotor (18a-b) et dans un mouvement imaginaire d'un point à partir d'une extrémité de l'arête avant (22a-b) à une autre extrémité de l'arête avant (22a-b), une direction de mouvement (30a-b, 32a-b) du point tourne par au moins 70° dans un sens.

6. Dispositif de turbine (10a-b) selon l'une des revendications précédentes,
**caractérisé en ce que** dans au moins une vue perpendiculairement sur une surface principale (28a-b, 38a-b) de la pale de rotor (18a-b), une distance perpendiculaire maximale (34a-b) entre une ligne de connexion (36a-b) de deux points extrêmes de l'arête avant (22a-b) et quelconques autres points de l'arête avant (22a-b) est au moins 15 % d'une longueur de la ligne de connexion (36a-b).

7. Dispositif de turbine (10a-b) selon l'une des revendications précédentes,
**caractérisé en ce que** l'arête avant (22a-b) a une rondeur raccordant au moins une première surface principale (28a-b) de la pale de rotor (18a-b) à au moins une deuxième surface principale opposée (38a-b) de la pale de rotor (18a-b).

8. Dispositif de turbine (10a-b) selon l'une des revendications précédentes,
**caractérisé en ce que** l'épaisseur s'augmente par au moins 200 % radialement dans une direction vers l'axe rotatif (14a-b).

9. Dispositif de turbine (10a-b) selon l'une des revendications précédentes,
**caractérisé en ce que** la pale de rotor (18a-b) est formé de façon non-symétrique rotationnelle.

10. Dispositif de turbine (10a-b) selon l'une des revendications précédentes,
**caractérisé en ce que** l'unité protective (20a-b) comprend au moins un élément de blindage (40a-b) qui est prévu pour au moins aggraver une entrée des objets dans une zone entre une face radialement extérieure de la pale de rotor (18a-b) et au moins une paroi (42a-b) de l'unité de conduit (12a-b).

11. Dispositif de turbine (10a-b) au moins selon la revendication 10,
**caractérisé en ce que** l'élément de blindage (40a-b) est réalisé au moins partiellement intégralement avec l'unité de conduit (12a-b).

12. Usine hydro-électrique (44a), en particulier avec protection augmentée des objets flottant dans un écoulement de fluide, avec un dispositif de turbine (10a) selon l'une des revendications précédentes.

13. Procédé pour une conception d'une usine hydro-électrique (44a), en particulier avec protection augmentée des objets flottant dans un écoulement de fluide, en particulier selon la revendication 12,
**caractérisé en ce qu'**une réduction en efficacité à cause de l'utilisation d'un dispositif de turbine (10a) selon l'une des revendications 1 à 11 est au moins compensée par la renonciation à au moins une autre mesure protective pour des objets flottant dans l'écoulement de fluide.
